# EUROPÄISCHE PATENTSCHRIFT

(11) **EP 0 712 519 B1**
(45) Veröffentlichungstag und Bekanntmachung des Hinweises auf die Patenterteilung: **23.04.1997**
(21) Anmeldenummer: 94925436.1
(22) Anmeldetag: 06.08.1994
(51) Int. Cl.: G07F 7/00

(54) **BESTELL- UND ABRECHNUNGSANLAGE**
ORDERING AND BILLING EQUIPMENT
SYSTEME DE COMMANDE ET DE FACTURATION

(30) Priorität: 10.08.1993 DE 4326756
(43) Veröffentlichungstag der Anmeldung: 22.05.1996
(73) Patentinhaber: Stephan, Ekkehard, D-50937 Köln (DE)
(72) Erfinder: Stephan, Ekkehard, D-50937 Köln (DE)
(74) Vertreter: Selting, Günther, Dipl.-Ing.
(86) Internationale Anmeldenummer: EP9402613
(87) Internationale Veröffentlichungsnummer: WO9504979

(56) Entgegenhaltungen:
- EP-A- 0 282 366
- DE-A- 2 312 784
- DE-A- 2 439 545
- DE-A- 3 215 035
- DE-A- 3 736 963
- DE-A- 3 933 773
- DE-A- 4 135 496
- FR-A- 2 562 295
- US-A- 4 396 985

## Beschreibung

Die Erfindung betrifft eine Bestell- und Abrechnungsanlage, insbes. für den Gastronomiebereich, mittels der Bestelleistungen vor Ort, z.B. am Tisch eines Restaurants, abgerechnet werden.

Eine der zeit- und personalaufwendigen Beschäftigungen im Gastronomiebereich besteht darin, für einen Tisch oder eine Gruppe zusammengerechnete Leistungen, z.B. für Speisen und Getränke, bei Bezahlung wieder aufzugliedern in von einzelnen Gästen zu zahlende Posten. Üblicherweise geschieht dies derzeit dadurch, daß das Personal die bereits bezahlten Positionen auf einer ausgedruckten Rechnung streicht oder abhakt und durch Kopfrechnung oder Aufsummieren auf einem separaten Blatt den Bestellwert der einzelnen Posten ermittelt. Neben Rechenfehlern besteht hier insbesondere die Gefahr, daß infolge der Aufbruchsstimmung einzelne Positionen übersehen und nicht in Rechnung gestellt werden, und somit der Gastwirt geschädigt wird. Ferner kommt es vor, daß einzelne Positionen versehentlich mehrfach in Rechnung gestellt und abkassiert werden, und damit der Gast geschädigt wird. Besondere Probleme entstehen noch dann, wenn einzelne Gäste eine detaillierte Quittung über ihre bezahlten Leistungen wünschen.

Aus der Praxis bekannt sind Bestellvordrucke, auf denen die bestellbaren Speisen und Getränke abgedruckt sind und angestrichen werden können, so daß die jeweiligen Leistungen erkennbar sind. Derartige Bestellzettel können jedoch nur bei einem eingeschränkten Angebot von Speisen und Getränken Verwendung finden. Ferner gilt auch hier, daß sich bei der Aufsummierung der Positionen Rechenfehler einschleichen können. Ferner haben derartige Zettel den Nachteil, daß bei mehreren aufeinanderfolgenden Bestellungen mehrerer Gäste an einem Tisch nicht mehr überschaubar ist, welches die zuletzt bestellten Speisen und Getränke waren, d.h. es ist jeweils fortlaufend eine doppelte Notierung erforderlich.

Aus EP-B-0 052 306 ist eine Vorrichtung zum Erfassen, Übertragen und Verarbeiten von als optisch lesbare Codes vorliegenden Daten bekannt mit einem batterieversorgten mobilen Lesestift, der eine Lese-, Speicher-, Verarbeitungs-, Sende- und Empfangseinheit aufweist, und mit einer stationären Sende- oder Empfangsanlage, an die weitere Datenverarbeitungsgeräte angeschlossen sind und die Daten mit dem Lesestift in einem drahtlosen Datentransfer austauscht und weiterverarbeitet.

Das Dokument DE-A-23 12 784 zeigt eine Bestell- und Abrechnungsanlage mit einer Ausgabeeinheit für Rechnungen mit eindeutiger Identifikation für die bestellten Waren. Die mobile Leseeinrichtung (Lesestift) weist jedoch keine Ausgabeeinrichtung auf.

Der Oberbegriff des Anspruchs 1 geht von DE-OS 32 15 035 A1 aus. Daraus ist eine Bestellanlage für den Gastronomiebereich bekannt, bei der der Kellner die Bestellungen am Tisch mit einer mobilen Einlese- und Ausgabevorrichtung (Handgerät) aufnimmt, über die die Bestellungen aufgegeben werden. Die mit dem Handgerät bestellten Leistungen werden an eine zentrale Prozessoreinheit drahtlos weitergegeben, wo sie gespeichert und weiterverarbeitet werden. Auf Veranlassung des Kellners veranlaßt die Prozessoreinheit den Ausdruck einer Rechnung. Sobald die Leistungen für die verschiedenen an einem Tisch plazierten Gäste nicht zusammen bezahlt werden, treten die bereits obengenannten Schwierigkeiten und Fehlerquellen auf.

Der Erfindung liegt die Aufgabe zugrunde, eine Bestell- und Abrechnungsanlage zu schaffen, die eine nachträgliche Herausnahme einzelner Positionen aus einer Rechnung ermöglicht und zuverlässig sicherstellt, daß es nicht zu Fehlabrechnungen kommt.

Die Lösung dieser Aufgabe erfolgt erfindungsgemäß mit den Merkmalen des Patentanspruchs 1.

Die Bestell- und Abrechnungsanlage besteht aus mindestens einer mobilen Einlese- und Ausgabevorrichtung und einer mit dieser kommunizierenden ortsfesten Prozessoreinheit. Die Prozessoreinheit dient zur Speicherung und Weiterverarbeitung von Daten, die die Einlese- und Ausgabevorrichtung liefert, und speichert darüberhinaus noch eine Reihe weiterer Daten, zum Beispiel Preise, vorrätige Ware oder dergleichen. Die Prozessoreinheit steuert eine mit ihr verbundene Ausgabeeinheit an, die beispielsweise ein Drucker ist und die die abzurechnenden Leistungen als Rechnung ausgibt. Jede einzelne Leistung ist als einzelne Position auf der Rechnung aufgeführt, wobei jede Position eindeutig anhand einer Identifikation mit der Einlese- und Ausgabevorrichtung ausgewählt und zu einem separaten Posten zusamengestellt werden kann, der eine oder mehrere Positionen umfassen kann, wobei die Einlese- und Ausgabevorrichtung den Postenpreis angibt. Dabei wird durch die Bestell- und Abrechnungsanlage sichergestellt, daß jede Position nach ihrer erstmaligen Auswahl entwertet wird, d.h. eine unbeabsichtigte Mehrfachberechnung einer Position (auch in unterschiedlichen Posten) ausgeschlossen ist, zugleich jedoch jede nicht ausgewählte und abgerechnete Position solange "stehen" bleibt, so daß mit Hilfe einer vorgesehenen Prüffunktion feststellbar ist, ob sämtliche Positionen entwertet wurden und ein Signal erzeugt bzw. nicht erzeugt wird, wenn noch Positionen "offen" sind.

Mit der erfindungsgemäßen Bestell- und Abrechnungsanlage ist es möglich, eine komplexe und fehlerresistente Abrechnung mit Hilfe der mobilen Einlese- und Ausgabevorrichtung vor Ort vorzunehmen, ohne eine aufwendige Hard- und Software mitführen zu müssen. Der Kellner selektiert mit der Einlese- und Ausgabevorrichtung aus der von der Ausgabeeinheit ausgeworfenen Rechnung einzelne Positionen. Jeder Position ist eine eindeutige Identifikation, z.B. eine Positionsnummer, zugeordnet, die vorzugsweise als Barcode, Strichcode oder Buchstabencode angegeben ist. Die Eingabe in die Einlese- und Ausgabevorrichtung kann über eine Fotozelle oder einen Scanner erfolgen, der die Identifikation direkt von der Rechnung liest, oder über eine Eingabetastatur mittels derer zum Beispiel die von der Rechnung abgelesene Positionsnummer eingegeben wird. Die Verbindung zwischen der mobilen Einlese- und Ausgabevorrichtung und der ortsfesten Prozessoreinheit kann sowohl drahtlos als auch im Rahmen einer vernetzten Anlage mit vorgesehenen Einsteckplätzen für die Einlese- und Ausgabevorrichtung erfolgen. Es kann vorgesehen werden, daß bei Aufteilung der Rechnung in mehrere Posten sogleich über jeden abgerechneten Posten eine separate Einzelrechnung von der Ausgabeeinheit ausgedruckt wird. Durch diese einfache Handhabung wird insbesondere im Gastronomiebereich dem Bedienpersonal die Abrechnung mit einzelnen Gästen deutlich erleichtert. Die mobile Einlese- und Ausgabevorrichtung zeigt jeweils den aufsummierten Postenpreis an, ohne daß der Betrag vom Bedienpersonal im Kopf oder auf einem separaten Blatt Papier auszurechnen wäre. Das Bedienpersonal braucht ebenfalls keine Notizen darüber anzufertigen, welche Positionen bereits bezahlt wurden. Es ist jederzeit möglich, über die Ausgabeeinheit eine Rest-Rechnung auszudrucken, in der nur die noch nicht abgerechneten Positionen aufgeführt und aufsummiert sind.

Die mobile Einlese- und Ausgabevorrichtung kann klein und kompakt realisiert werden, so daß sie leicht in einer Tasche Platz findet. Die Prozessoreinheit kann die von der Einlese- und Ausgabevorrichtung registrierten Werte weiter statistisch auswerten, zum Beispiel für Zwecke der Lagerhaltung, der Provisionsberechnung für das Bedienpersonal oder der Finanzbuchhaltung.

Es ist möglich, mit der Einlese- und Ausgabevorrichtung auch Tischnummern und/oder Bestellungen aufzunehmen. Dafür kann entweder die gewöhnliche Speisekarte diese Informationen in für die Einlese- und Ausgabevorrichtung lesbarer Form bereithalten, oder aber das Bedienpersonal führt eine kodierte Speisekarte mit sich, die mit der Einlese- und Ausgabevorrichtung gelesen werden kann. Die Tischnummer kann auch auf dem Tisch maschinenlesbar angebracht sein. Die Bestellung wird von der Prozessoreinheit nach Speisen und Getränken sortiert an Küche bzw. an Getränkeausschank weitergeleitet, wo ein vorzugsweise mit der Tischnummer versehener Ausdruck die Speisen bzw. die Getränke anfordert. Es ist möglich, zum Beispiel bei der Zusammenstellung der Speisen eine Sortierung vorzunehmen, so daß der Ausdruck in der Küche eine Staffelung in verschiedene Gänge (zum Beispiel Vorspeise, Hauptgericht, Nachspeise) aufweist. Dies ist insbesondere dann gewährleistet, wenn mit der Einlese- und Ausgabevorrichtung zugleich mit der Bestellungsaufnahme auf Wunsch für jeden Gast eine Personenidentifikation eingegeben wird. In diesem Fall ist auch möglich, durch die Prozessoreinheit für jeden Tisch eine gastweise aufgrund der Personenidentifikation vorgenommene Rechnung auszustellen.

Mit der erfindungsgemäßen Bestell- und Abrechnungsanlage können auch andere Arten von Lieferungen vor Ort in verschiedene Posten unterteilt und separat abgerechnet werden, z. B. frei Haus gelieferte Tiefkühlkost, Sammelbestellungen bei Versandhäusern oder Privatgespräche in einer innerbetrieblichen Telefongebührenabrechnung.

Die Erfindung wird im folgenden anhand eines Ausführungsbeispiels unter Bezugnahme auf die Figuren näher erläutert.

Es zeigen:
- Fig. 1:: eine schematische Darstellung einer Bestell- und Abrechnungsanlage im Gaststättenbereich, und
- Fig. 2:: ein Beispiel für die Gesamtrechnung eines Tisches.

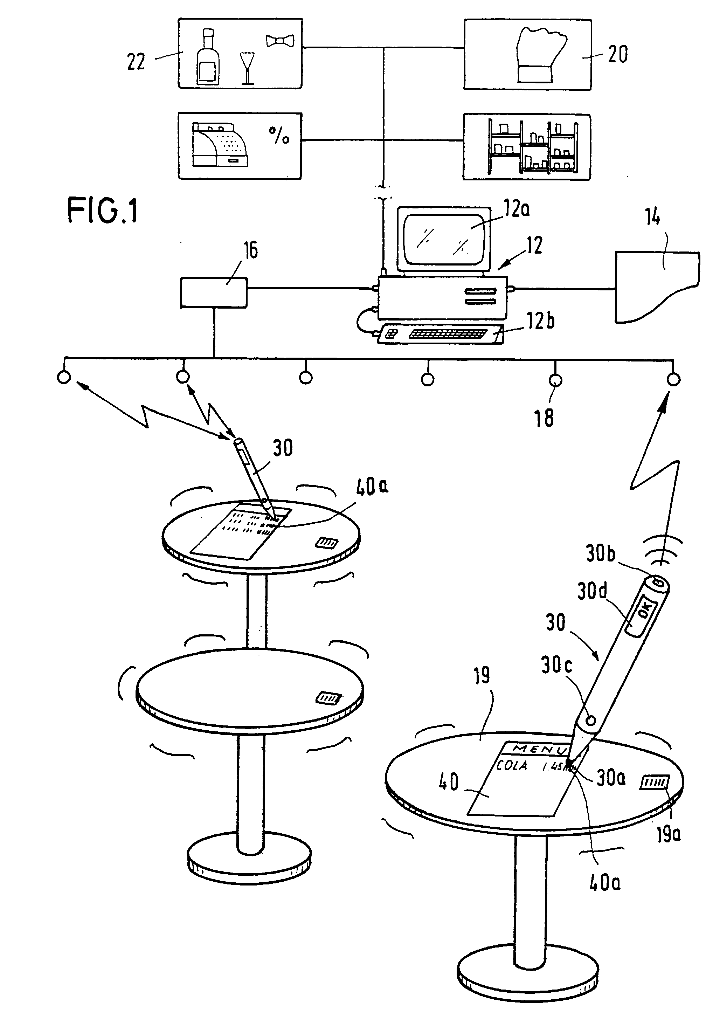

In Fig. 1 ist eine Bestell- und Abrechnungsanlage für den Restaurantbereich schematisch dargestellt. Die Bestell- und Abrechnungsanlage weist einen im Thekenbereich aufgestellten Personalcomputer (Prozessoreinheit) 12 auf, an den ein Drucker 14 angeschlossen ist. An den Personalcomputer 12 ist weiterhin eine beispielsweise als Steckkarte realisierte Ein- und Ausgabeverwaltungseinheit 16 angeschlossen, welche mit einer Vielzahl von über den Speiseraum verteilten Sende- und Empfangseinrichtungen 18 verbunden ist. Die Ein- und Ausgabeverwaltungseinheit 16 dient in erster Linie dazu, parallel eingehende und ausgehende Daten zu sortieren und so aufzubereiten, daß sie eindeutig in einem Speichermedium des Personalcomputers 12 abgelegt werden können. Der Personalcomputer 12 ist weiterhin mittels Standleitung mit Ein-/Ausgabeeinheiten in der Küche und im Theken-/Bar-Bereich verbunden. Der Personalcomputer 12 verfügt über einen Bildschirm 12a und über eine Vielzahl von Speichern und Registern, die nicht dargestellt sind, sowie über eine Tastatur 12b, über die Änderungen der Preise oder der zur Verfügung stehenden Speisen und Getränke direkt online eingegeben werden können.

Im Speiseraum der Gaststätte sind eine Vielzahl von Tischen verteilt, wobei jeder Tisch mit einer als Strichcode (Barcode) verschlüsselten auf dem Tisch 19 aufgeklebten Tischnummer 19a versehen ist. Jeder der eine Anzahl von Tischen betreuenden Kellner führt eine als Lesestift 30 ausgebildete Einlese- und Ausgabevorrichtung mit sich. Der Lesestift 30 hat eine langgestreckte Form, die an dem vorderen Ende kegelförmig auf eine nahezu punktförmige Fotozelle 30a zuläuft. An dem der Fotozelle 30a abgewandten Ende des Lesestifts 30 ist eine Sende- und Empfangsvorrichtung 30b angeordnet, die mit den Sende- und Empfangseinrichtungen 18 Funksignale austauschen kann. Die elektrische Versorgung der Sende- und Empfangseinrichtung 30b erfolgt über in dem Lesestift 30 integrierte Batterien, die nicht dargestellt sind. Kurz vor dem Übergang in den Kegelstumpfbereich befindet sich am vorderen Ende des Lesestiftes 30 eine Taste 30c, sowie im hinteren Bereich des Lesestifts 30 ein LCD-Display 30d, das als Multifunktionsanzeige ausgebildet ist.

Der typische Ablauf einer Bewirtung im Restaurant kann mit der Bestell- und Abrechnungsanlage im Ablauf deutlich verkürzt und vereinfacht werden. In einem ersten Schritt ist es möglich, mit Hilfe des Lesestiftes 30 die Bestellungen der Restaurantgäste aufzunehmen und weiterzuleiten, ohne daß es eines Notizzettels bedarf bzw. eine Wegstrecke zu Theke oder Küche nötig wäre. Die Bestellung wird vom Kellner mit dem Lesestift 30 unmittelbar von einer Speisekarte 40 abgelesen. Die Speisekarte 40 weist neben der Bezeichnung des Getränks bzw. der Speise und deren Preise noch einen Strichcode 40a auf, der mit dem Lesestift 30 überstrichen wird und dessen Information durch die Funkverbindung 30b-18 an den Computer 12 gelangt. Dieser kann anhand der durchgegebenen Kennung erkennen, ob es sich um Speisen handelt, die von der Küche 20 zubereitet werden oder um Getränke, die an einer Bar 22 oder Theke eingeschenkt werden. Die Bestellungen werden an die entsprechenden Adressaten weitergeleitet und dort mit Angabe der Tischnummer für die Auslieferung zusammengestellt. Dabei ist es möglich, innerhalb der an die Küche 20 weitergereichten Zusammenstellung eine Sortierung vorzunehmen, beispielsweise nach einer datenbankmässig erfaßten und in Anwendung gebrachten Dauer der Speisenzubereitung, so daß die Gänge eines Tisches jeweils zeitgleich fertiggestellt werden und die Speisen noch heiß dort angeliefert werden können. Es ist nicht erforderlich, daß auf allen Speisekarten der von dem Lesestift 30 lesbare Strichcode angebracht ist. Es reicht aus, wenn der Kellner eine Strichcode-Karte mitführt, bei der beispielsweise Preise und andere für die Bestellung unnötige Angaben fehlen können, so daß sie kompakt als Ablesetafel (Kellner-Speisekarte) realisierbar ist.

Um eine Bestellung, z.B. am Tisch Nr. 19, aufzunehmen, fährt der Kellner mit dem Lesestift erst einmal über die auf dem Tisch angebrachte Tischnummer 19a. Es ist aber auch möglich, daß die Tische in der Kellner-Speisekarte schematisch dargestellt sind und darin vor der Bestellung mit dem Lesestift 30 eingelesen werden. Dadurch ist die Aufnahme von Bestellungen auch dann möglich, wenn der Zugang zur Tischnummer 19a z. B. durch Geschirr verstellt ist. Die Information wird über die Sende- und Empfangsvorrichtung 30b bzw. -einrichtung 18 an den Personalcomputer 12 weitergeleitet, der nun die für diese Tischnummer 19a eingehenden Bestellungen abwartet. Der Lesestift 30 sendet die eingelesenen Informationen stets unmittelbar aus und erhält ein Feedback, das auf dem Display 30d als Quittung oder Mitteilung des erfolgreichen Datentransfers erscheint. Auf diese Weise kann der Kellner sicherstellen, daß die Bestellung auch angekommen ist. Nunmehr kann der Kellner mit dem Lesestift die gewünschten Speisen und Getränke durch Überstreichen des Strichcodes 40a mit dem Lesestift 30 auswählen, wobei in gleicher Art eine Bestätigung der erfolgreichen Übertragung auf der Multifunktionsanzeige 30d erfolgt. Falls Speisen ausgegangen sind, und dies vorher im Computer 12 abgespeichert wurde, wird dies auf dem Display 30d angezeigt und der Gast kann sofort eine andere Speise bestellen. Dadurch kann der Kellner auch bei gerade eingetretenen Engpässen die Information weitergeben.

Fehlbestellungen bzw. Umbestellungen der Gäste können ebenfalls am Tisch vom Kellner korrigiert werden, indem mit einer (nicht dargestellten) Taste am Lesestift 30 oder einem Strichcode auf der Kellner-Speisekarte angezeigt wird, daß der im Anschluß gelesene Strichcode 40a als Bestellung storniert werden soll. Es ist möglich, für bereits fertiggestellte Speisen oder Getränke eine Storno-Sperre vorzusehen. Nach einer stornierten Bestellung ist der Lesestift 30 wieder bestellaufnahmebereit, so daß die richtige Eingabe sofort erfolgen kann.

Durch Betätigung der Taste 30c wird das Ende der Bestellungen angezeigt, um die Empfangsbereitschaft für Bestellungen von dem Tisch 19 wieder abzuschalten. Dies kann jedoch auch durch das Überstreichen eines dafür vorgesehenen Strichcodes "Ende der Bestellung" auf der Kellner-Speisekarte erfolgen, wie im übrigen sämtliche Funktionen der Taste 30c durch Lesen eines Strichcode-Befehls mit dem Lesestift 30 realisiert werden können, so daß eine Taste 30c nicht zwingend erforderlich ist.

Es ist nicht erforderlich, für die Auswahl mit dem Lesestift 30 einen Strichcode 40a vorzusehen. Es ist z.B. möglich, den Lesestift 30 als handlichen Scanner oder dergleichen auszubilden, mit dem eine maschinenlesbare Klarschrift gelesen werden können. Vorteilhafterweise besteht die Speisekarte 40 aus einer Vielzahl von Blättern, die bei Aktualisierung aufgrund von Preisänderungen, wechselnden Tagesgerichten oder saisonellen Aktualisierungen von dem Drucker 14 ausgedruckt werden können. Da der Drucker 14 ohnehin, wie später noch beschrieben wird, Strichcodes ausdrucken kann, kann er auch zum Erstellen der jeweils aktuellen Speisekarte 40 verwendet werden.

Über die Tastatur 12b des Personalcomputers oder eine mit dem Lesestift 30 zu lesende als Strichcode dargestellte Anweisung, zum Beispiel durch zweimaliges Lesen der Tischnummer oder durch Lesen der Tischnummer und anschließendes Drücken der Taste 30c, veranlaßt der Personalcomputer 12 den Ausdruck einer Rechnung 50 für den zahlungswilligen Tisch über den Drucker 14. Selbst wenn nur einige der Gäste zahlen wollen, wird die Gesamtrechnung 50 ausgedruckt. Der Personalcomputer 12 hat sämtliche bestellte Speisen von der Bestellung an gespeichert, so daß bei Ausdruck der Rechnung 50 sichergestellt ist, daß keine anderen Speisen oder Getränke abgerechnet werden können als die, die bestellt wurden.

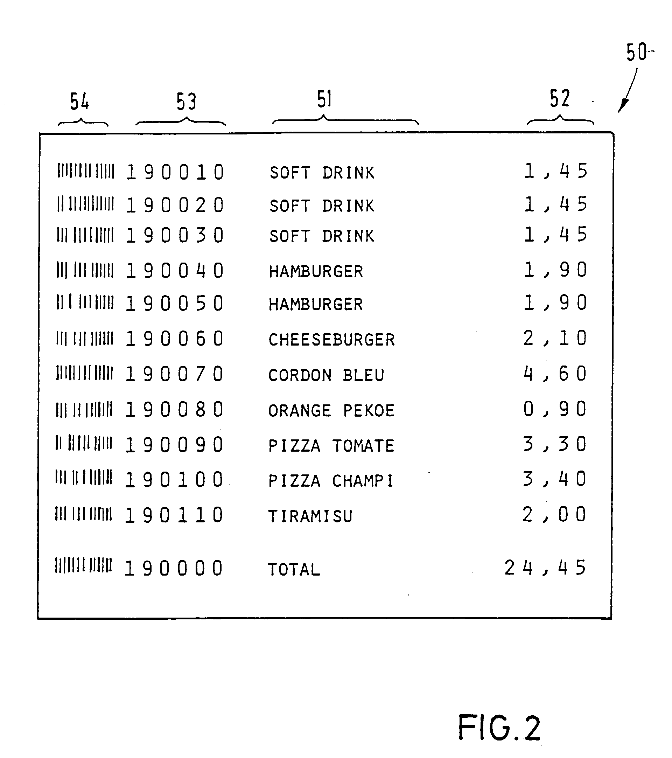

Der Aufbau einer Rechnung 50 ist beispielhaft in Fig. 2 gezeigt. Die gedruckte Rechnung 50 weist für jede bestellte Leistung eine einzelne, eine Position darstellende Zeile auf, in der neben der (ggf. abgekürzten) Bezeichnung 51, z.B. "Cheeseburger" auch der Preis 52 der Position, z.B. "2.10" für den Gast lesbar sind. Als letzte Zeile ist der Gesamtbetrag der Rechnung 50 ausgedruckt, so daß sie sofort beglichen werden kann. Ferner weist jede Position der Rechnung 50 sowie auch der Gesamtbetrag eine sechstellige Identifikationsnummer 53 auf. Die ersten beiden Ziffern bezeichnen die Tischnummer, z.B. Tisch Nr. 19. Die nächsten drei Ziffern werden vom Computer 12 in der Reihenfolge der aufgenommenen Bestellungen fortlaufend mit "001" beginnend vergeben, wobei der Gesamtbetrag "TOTAL" stets mit "ooo" bezeichnet ist. Damit ist jede Position auf der Rechnung 50 auch für den Kellner bereits eindeutig identifizierbar. Die letzte Stelle der Identifikationsnummer 53 ist zum Beispiel als Gastkennung oder als Prüfziffer vorgesehen. Schließlich ist ein Strichcode 54 zu jeder Position ausgedruckt, der im wesentlichen die kodierte Identifikationsnummer 53 darstellt, um sie für den Lesestift 30 lesbar zu gestalten. Neben den o.g. Inhalten können auf der Rechnung 50 noch eine Vielzahl weiterer Informationen aufgedruckt sein, z.B. Datum, Zeitpunkt der Bestellungsaufnahme und der Rechnungserstellung, Mehrwertsteuer, Name des Kellners, Anzahl der bewirteten Personen etc.

Wird vom Bedienpersonal die vom Drucker 14 ausgedruckte Rechnung 50 an den Tisch, beispielsweise an den Tisch Nr. 19 gebracht und wünschen einige Gäste ihre bestellten Leistungen separat zu zahlen, reicht es aus, mit dem Lesestift 30 den Barcode 54 der zu einem separat abzurechnenden Posten zusammenzufassenden Positionen zu überstreichen. Diese Information wird von der Sende- und Empfangsvorrichtung 30b an den Computer 12 weitergeleitet. Der Computer 12 vermerkt, daß diese Position aus der Gesamtrechnung 50 herausgenommen ist und meldet den Preis 52, der zu bezahlen ist, an den Lesestift 30 zurück, der ihn im Display 30d anzeigt. Darüberhinaus meldet der Computer 12 die Summe der für den laufenden Posten aufgelaufenen Beträge 52 zurück, die im Anschluß an den Einzelbetrag im Display 30d angezeigt wird. Der Betrag 52 für eine Position wird ca. 3 Sekunden angezeigt, danach leuchtet der Gesamtbetrag auf. Dies wird nun für alle Positionen, die ein Gast abzurechnen wünscht, wiederholt. Wird versehentlich eine bereits abgerechnete und dabei vom Computer 12 entwertete Position ausgewählt, wird dies dem Benutzer als unzulässige Auswahl zurückgemeldet, und der bisherige Gesamtbetrag danach wieder angezeigt. Durch das Drücken der Taste 30c (oder durch das Lesen eines entsprechenden Strichcode-Befehls) signalisiert der Bediener, daß der Posten nunmehr vollständig ist, und der im Display 30d angezeigte Gesamtbetrag, der den Postenpreis bildet, kann kassiert werden. Gleichzeitig aktualisiert der Computer 12 mit jeder Streichung den Rechnungsgesamtbetrag. Es ist also möglich, mit dem Lesestift 30 weitere separate Posten durch Auswahl einzelner Positionen zu bilden oder aber über den Barcode 54 für die Gesamtsumme "Total" in Fig. 2 zu streichen, wodurch der Restbetrag, der für alle noch auf der Rechnung 50 aufgeführten und nicht abgestrichenen Positionen zu zahlen ist, auf dem Display 30d angezeigt wird. Es ist möglich, beispielsweise durch die Dauer des Niederhaltens der Taste 30c den Computer 12 zu veranlassen, über jeden einzelnen abgerechneten Posten eine separate Rechnung auszudrucken. Dies ist z.B. dann wichtig, wenn die Rechnung für Speisen und Getränke vom Gast im Rahmen einer Reisekostenabrechnung benötigt wird. Selbstverständlich ist es möglich, Mehrwertsteuerbeträge und dergleichen separat auszuweisen.

Es ist auch möglich, in dem Strichcode 54 auch die Information über den Preis 52 der Position sowie den zur Identifizierung der Position notwendigen Teil der Identifikationsnummer 53 zu verschlüsseln. Mit Hilfe eines in dem Lesestift 30 integrierten Hilfscomputers können dann die Summationen zu Posten und das Entwerten der ausgewählten Positionen vorgenommen werden. Durch abschließendes Überstreichen der Position "TOTAL" kann die Summe der Postenpreise mit dem Gesamtrechnungsbetrag verglichen werden und geprüft werden, ob noch ein Fehlbetrag stehen geblieben ist. Die vom Hilfsprozessor vorgenommenen Operationen können nach dem Abkassieren mit dem Computer 12 ausgetauscht werden. Dadurch ist es möglich, die Bestell- und Abrechnungsanlage auch bei vorübergehender Störung der drahtlosen Verbindung von Computer 12 und Lesestift 30 zu betreiben.

Alternativ zu einer Einlese- und Ausgabevorrichtung, die als Lesestift 30 ausgebildet ist, kann diese auch mit einer scannerartigen Leseeinrichtung versehen sein. Eine derartige Leseeinrichtung verfügt über einen rechteckigen Lesebereich, der auf eine zu lesende Stelle aufgesetzt, wobei diese von einem Lichtstrahl abgetastet wird, eine Auswerteeinheit die abgetasteten Informationen entschlüsselt und weiterverarbeitet. Da bei der scannerartigen Leseeinrichtung der Lichtstrahl eine Überstreichbewegung über die zu lesende Stelle ausführt, ist es nicht notwendig, die Streichbewegung von Hand auszuführen. Dies erhöht die Lesesicherheit und erspart gegebenenfalls notwendige mehrfache Leseversuche bis zur erfolgreichen Zeichenerkennung. Inbesondere ist es mit einem Scanner möglich, gewöhnliche Maschinenschrift zu lesen, so daß es keiner zusätzlichen Kodierung mit einem Strichcode 54 bedarf.

Alternativ ist es möglich, eine Einlese- und Ausgabevorrichtung mit einer Tastatur vorzusehen, mit der die einzelnen Positionen, z.B. durch ihre Identifikationsnummer 53 auf der Rechnung 50 eingegeben werden, wobei ein in die Einlese- und Ausgabevorrichtung integrierter Hilfsprozessor Rechen- und Speicheroperationen ausführt. Der Hilfsprozessor kann beispielsweise nach einer Eingabe über die Tastatur über Funk die Informationen zu einem bestimmten Tisch anfordern, insbesondere die einzelnen Positionen einer Rechnung betragsmäßig zwischenspeichern. Die oben beschriebenen Streichoperationen können dann von der Einlese- und Ausgabevorrichtung vorgenommen werden und erst im Anschluß an eine erfolgte Abrechnung werden die Daten mit dem Computer 12 ausgetauscht. Dabei übernimmt der Hilfsprozessor die Aufgabe, sicherzustellen, daß keine Position doppelt abgerechnet wird und daß sämtliche Positionen abgerechnet wurden. Die Kontrolle, daß sämtliche Positionen abgerechnet wurden, kann beispielsweise mit dem Display dadurch geschehen, daß nach erfolgreichem Abschluß sämtlicher Positionen die Anzeige blinkt. Auch bei einer mit Tasten versehenen Einlese- und Ausgabevorrichtung ist es möglich, den Scanner normale gedruckte Schriftzeichen lesen zu lassen, so daß ein Strichcode nicht erforderlich ist. Auch die Tischnummer kann dann mit ihren arabischen Ziffernkombination erfaßt werden, ebenso die Bestellnummern auf der Speisekarte.

## Patentansprüche

1. Bestell- und Abrechnungsanlage, insbesondere für den Gastronomiebereich, mit mindestens einer mobilen Einlese- und Ausgabevorrichtung (30) zur Aufnahme und Abrechnung von bestellten Leistungen und einer mit der Einlese- und Ausgabevorrichtung (30) kommunizierenden ortsfesten Prozessoreinheit (12) zur Speicherung und Weiterverarbeitung von mit der Einlese- und Ausgabevorrichtung (30) ausgetauschten Daten,
**dadurch gekennzeichnet,**
daß eine von der Prozessoreinheit (12) ansteuerbare Ausgabeeinheit (14) vorgesehen ist, über die die abzurechnenden Leistungen als Rechnung (50) ausgegeben werden, wobei jede erbrachte Leistung als einzelne Position mit einer eindeutigen Identifikation auf der Rechnung (50) aufgeführt ist,
daß mit der Einlese- und Ausgabevorrichtung (30) Positionen der Rechnung (50) zu separat abzurechnenden Posten auswählbar bzw. zusammenstellbar sind, wobei die Einlese- und Ausgabevorrichtung (30) den separat zu entrichtenden Postenpreis angibt,
daß jede Position nach ihrer erstmaligen Auswahl entwertet wird, und
daß eine Prüffunktion vorgesehen ist, ob sämtliche Positionen entwertet wurden und ein Signal erzeugt bzw. nicht erzeugt wird, wenn dies der Fall ist.

2. Anlage nach Anspruch 1, dadurch gekennzeichnet, daß an der Einlese- und Ausgabevorrichtung (30) eine Taste (30b) vorgesehen ist, deren Betätigung einen Posten abschließt.

3. Anlage nach Anspruch 1 oder 2, dadurch gekennzeichnet, daß die Einlese- und Ausgabevorrichtung (30) ein Lesestift ist, der die von der Ausgabeeinheit (14) durch einen Strichcode (54) dargestellten Positionen der Rechnung (50) einzeln liest.

4. Anlage nach einem der Ansprüche 1 bis 3, dadurch gekennzeichnet, daß die Prozessoreinheit (12) mit der Einlese- und Ausgabevorrichtung (30) drahtlos kommuniziert.

5. Anlage nach einem der Ansprüche 1 bis 4, dadurch gekennzeichnet, daß ein Hilfsprozessor in die Einlese- und Ausgabevorrichtung (30) integriert ist, der mehrere Register zur Abspeicherung und/oder Verarbeitung eingelesener Informationen aufweist.

6. Anlage nach einem der Ansprüche 1 bis 5, dadurch gekennzeichnet, daß die Einlese- und Ausgabevorrichtung (30) eine Display-Anzeige (30d) aufweist.

7. Anlage nach einem der Ansprüche 1 bis 6, dadurch gekennzeichnet, daß die Einlese- und Ausgabevorrichtung (30) eine Eingabetastatur mit Zahlen und Symbolen aufweist, die zur Dateneingabe betätigbar sind.

8. Anlage nach einem der Ansprüche 1 bis 7, dadurch gekennzeichnet, daß die Einlese- und Ausgabevorrichtung (30) eine Sende- und Empfangseinheit (30b) aufweist, die mit mit der Prozessoreinheit (12) Daten austauscht.

9. Anlage nach einem der Ansprüche 1 bis 8, dadurch gekennzeichnet, daß die Einlese- und Ausgabevorrichtung (30) die bestellten Leistungen von einer Speisekarte (40) liest und an die Prozessoreinheit (12) übermittelt.

10. Anlage nach einem der Ansprüche 1 bis 9, dadurch gekennzeichnet, daß die Einlese- und Ausgabevorrichtung (30) eine Tischnummer (19a) von einem Tisch (19) oder von einer Speisekarte (40) abliest und an die Prozessoreinheit (12) übermittelt, wobei unterschieden wird, ob für den Tisch eine Rechnung (50) gewünscht wird oder Bestellungen aufzunehmen sind.

11. Anlage nach einem der Ansprüche 1 bis 10, dadurch gekennzeichnet, daß die Prozessoreinheit (12) Bestellungen je nach ihrer Art an eine Küche (20) oder einen Getränkeausschank (22) weiterleitet.

12. Anlage nach einem der Ansprüche 1 bis 11, dadurch gekennzeichnet, daß die Prozessoreinheit (12) abgerechnete Positionen für Zwecke der Finanzbuchhaltung und der Statistik aufbereitet und abspeichert.

13. Anlage nach einem der Ansprüche 1 bis 12, dadurch gekennzeichnet, daß die Prozessoreinheit (12) auf der Grundlage abgerechneter Positionen eine Lagerbestandsanpassung veranlaßt.

## Claims

1. An ordering and billing equipment, particularly for the catering field, comprising at least one mobile read-in and output device (30) for receiving and billing ordered services, and a stationary processor unit (12) communicating with the read-in and output device (30), for storing and further processing data exchanged with the read-in and output device (30),
**characterized in**
that an output unit (14) is provided which can be driven by the processor unit (12), via which output unit the services to be billed are outputted as a bill (50), each service rendered being listed on the bill (50) as a separate item with a unique identification,
that items of the bill (50) can be selected and respectively combined by the read-in and output device (30) to form posts to be billed separately, the read-in and output device (30) indicating the post price to be paid separately,
that each item is obliterated after its first selection, and
that a check function is provided to check whether all items have been obliterated, and, if this is the case, a signal is generated or not generated.

2. The equipment according to claim 1, characterized in that the read-in and output device (30) is provided with a key (30b) to be actuated for closing a post.

3. The equipment according to claim 1 or 2, characterized in that the read-in and output device (30) is a reading pin separately reading the items of the bill (50) represented as a bar code (54) by the output unit (14).

4. The equipment according to any one of claims 1 to 3, characterized in that the processing unit (12) communicates with the read-in and output device (30) in a wireless manner.

5. The equipment according to any one of claims 1 to 4, characterized in that an auxiliary processor comprising several registers for storing and/or processing inputted information, is integrated in the read-in and output device (30).

6. The equipment according to any one of claims 1 to 5, characterized in that the read-in and output device (30) comprises a display (30d).

7. The equipment according to any one of claims 1 to 6, characterized in that the read-in and output device (30) comprises an input keyboard with numbers and symbols operable for inputting data.

8. The equipment according to any one of claims 1 to 7, characterized in that the read-in and output device (30) comprises a transmitting and receiving unit (30b) exchanging data with the processor unit (12).

9. The equipment according to any one of claims 1 to 8, characterized in that the read-in and output device (30) reads the ordered services from a menu (40) and transmits them to the processor unit (12).

10. The equipment according to any one of claims 1 to 9, characterized in that the read-in and output device (30) reads a table number (19a) from a table (19) or menu (40) and transmits it to the processor unit (12), it being differentiated whether a bill (50) is wanted or orders are to be taken down for said table.

11. The equipment according to any one of claims 1 to 10, characterized in that the processor unit (12) passes orders, depending on their type, to a kitchen (20) or a beverage bar (22).

12. The equipment according to any one of claims 1 to 11, characterized in that the processor unit (12) edits and stores billed items for purposes of financial bookkeeping and statistics.

13. The equipment according to any one of claims 1 to 12, characterized in that the processor unit (12) initiates a stock adaptation on the basis of billed items.

## Revendications

1. Installation pour commande et facturation, en particulier dans le domaine de la restauration, comprenant au moins un dispositif de lecture et de sortie (30) mobile, destiné à enregistrer et à facturer les services commandés, et une unité centrale de traitement (12) fixe en un lieu, communiquant avec le dispositif de lecture et de sortie (30), destinée à stocker et traiter les données échangées avec le dispositif de lecture et de sortie (30), caractérisée
en ce qu'il est prévu de monter un périphérique de sortie (14), qui peut être commandé par l'unité centrale de traitement (12) et qui émet les services facturés sous forme de facture (50), chaque service fourni étant présenté sur la facture (50) en tant que poste individuel avec une identification explicite,
en ce que les postes de la facture (50) peuvent être sélectionnés ou regroupés avec le dispositif de lecture et de sortie (30) en postes à facturer séparément, le dispositif de lecture et de sortie (30) indiquant le prix de chaque poste à régler séparément,
en ce que chaque poste est composté (ou désactivé) après sa première sélection, et
en ce qu'une fonction de contrôle est installée, permettant d'assurer que tous les postes ont été compostés et qu'un signal est émis ou non, si cela est le cas.

2. Installation selon la revendication 1, caractérisée en ce que le dispositif de lecture et de sortie (30) est muni d'une touche (30b), permettant de clore l'enregistrement d'un poste.

3. Installation selon la revendication 1 ou 2, caractérisée en ce que le dispositif de lecture et de sortie (30) est un crayon optique, qui lit individuellement chaque poste de la facture (50) représenté par un code barres (54) par le périphérique de sortie (14).

4. Installation selon l'une des revendications 1 à 3, caractérisée en ce que l'unité centrale de traitement (12) communique par télécommande avec le dispositif de lecture et de sortie (30).

5. Installation selon l'une des revendications 1 à 4, caractérisée en ce qu'un processeur auxiliaire est intégré dans le dispositif de lecture et de sortie (30), processeur qui comprend plusieurs registres destinés à stocker et/ou traiter les données entrées en lecture.

6. Installation selon l'une des revendications 1 à 5, caractérisée en ce que le dispositif de lecture et de sortie (30) comprend un dispositif d'affichage (30d).

7. Installation selon l'une des revendications 1 à 6, caractérisé en ce que le dispositif de lecture et de sortie (30) comprend un clavier d'entrée muni de touches avec des chiffres et des symboles, utilisées pour entrer les données.

8. Installation selon l'une des revendications 1 à 7, caractérisée en ce que le dispositif de lecture et de sortie (30) comprend une unité d'émission et de réception (30b), qui échange des données avec l'unité centrale de traitement (12).

9. Installation selon l'une des revendications 1 à 8, caractérisée en ce que le dispositif de lecture et de sortie (30) lit les services commandés sur une carte de menus (40) et les transmet à l'unité centrale de traitement (12).

10. Installation selon l'une des revendications 1 à 9, caractérisée en ce que le dispositif de lecture et de sortie (30) lit un numéro de table, sur une table (19) ou sur une carte de menus (40), et le transmet à l'unité centrale de traitement (12), tout en différenciant si la table souhaite une facture (50) ou passer une commande.

11. Installation selon l'une des revendications 1 à 10, caractérisée en ce que l'unité centrale de traitement (12) transmet les commandes, en fonction de leur nature, à une cuisine (20) ou à un bar (22).

12. Installation selon l'une des revendications 1 à 11, caractérisée en ce que l'unité centrale de traitement (12) prépare et enregistre les postes facturés pour la comptabilité et les statistiques.

13. Installation selon l'une des revendications 1 à 12, caractérisée en ce que l'unité centrale de traitement (12) fait procéder à une rotation des stocks en se basant sur les postes facturés.
